# EUROPEAN PATENT SPECIFICATION

(11) **EP 0 462 615 B1**
(45) Date of publication and mention of the grant of the patent: **11.01.1995**
(21) Application number: 91110176.4
(22) Date of filing: 20.06.1991
(51) Int. Cl.: B62M 7/04, B62K 5/04

(54) **Scooter-type vehicle**
Rollerartiges Fahrzeug
Véhicule du type scooter

(30) Priority: 21.06.1990 JP 161325/90; 21.06.1990 JP 161326/90; 28.06.1990 JP 168543/90; 28.06.1990 JP 168544/90
(43) Date of publication of application: 27.12.1991
(73) Proprietor: SUZUKI KABUSHIKI KAISHA, Hamamatsu-Shi, Shizuoka-Ken (JP)
(72) Inventor: Kurata , Koji, Hamamatsu-shi, Shizuoka-ken (JP)
(74) Representative: Klunker . Schmitt-Nilson . Hirsch

(56) References cited:
- FR-A- 2 353 432
- FR-A- 2 533 260
- FR-A- 2 599 702
- US-A- 4 421 194
- US-A- 4 697 664

## Description

The present invention relates to a scooter-type vehicle according to the pre-characterizing part of claim 1. A vehicle of this type is known from FR-A-2 599 702, for example.

Scooter-type vehicles are characterized by their layout in which a step board is placed in front of a seat, a rear body on which the seat is placed has a relatively large volume and a housing box provided therein, and a unit swing type engine is disposed under the housing box.

A front wheel is controlled by a handle and a rear wheel is driven by an engine. A step board is placed so as to be curved at a lower position between the handle and a seat. A rear body on which the seat is placed also serves as a housing box, and the unit swing type engine is disposed under the rear body.

The engine has a cylinder substantially horizontally provided on the front portion thereof, a crankcase connected to the rear side of the cylinder, and a swing case provided on one side of the crankcase so as to backwardly extend. The rear wheel placed immediately behind the crankcase is rotatably supported by a rear portion of the swing case. The unit swing type engine configures as described above also has a supporting arm which is provided on an upper-front portion thereof and which is supported by a frame so that it can oscillate in the vertical direction. The unit swing type engine is supported by a rear cushion unit in an upper-rear portion thereof so as to be cushioned and suspended.

An exhaust pipe is downwardly extended from the cylinder, and an inlet pipe is introduced into an upperfront portion of the crankcase. A carburetor connected to the inlet pipe is placed at an upper-rear position of the crankcase, and an air cleaner is further connected to the rear side of the carburetor.

In such a unit swing type engine, the stroke amount of the rear cushion unit is determined by the positional relation and the relation in clearance between the housing box and the upper portion of the engine, i.e., the cylinder, the carburetor, the air cleaner and an oil pump and an ignition coil both of which are disposed on an upper-rear portion of the crankcase. When a fuel tank and an oil tank are disposed behind the housing box, the stroke amount is determined by the positional relation between both tanks and the air cleaner and the rear wheel. Similarly, the height of the seat and the shape of the bottom of the housing box are also determined by the above positional relations.

There are thus limitations in demands for an increase in the stroke amount of the rear cushion unit in serious consideration of comfortable driving, a decrease in the height of the seat for improving the step feeling and an improvement in shape of the bottom of the housing box for increasing the volume thereof. All the demands and each of the demands cannot be frequently satisfied.

In addition, the cylinder, the carburetor, the air cleaner, the ignition coil, the oil pump and, if a forcedly air-cooled engine is mounted, a casing for a cooling blast fan have different shapes from the functional viewpoint of form an irregular outline. This irregular outline makes the above limitations strict. The irregular outline also produces interference with the work of attaching the unit swing engine to and detaching it from the vehicle body.

The object of the present invention is to provide a scooter-type vehicle according to the pre-characterizing part of claim 1, in which the stroke amount of a rear cushion unit is increased, while the height of the seat can be decreased and the workability when attaching and detaching the unit swing type engine is improved.

In order to achieve the object, a scooter-type vehicle in accordance with the present invention comprises the feature of the characterizing part of claim 1.

The present invention thus enables the simplification of locus and range of the oscillation of the engine around a pivot serving as a center because the upper end of the upper side profile of the unit swing type engine does not project from the reference line even if there is irregularity at several points in the profile. It is thus possible to easily increase the stroke amount of the rear cushion unit and improve the feeling of driving.

In relation to this, the height of the seat can be decreased for improving the feeling of step, and the volume of the housing box can be increased without much efforts because the degree of freedom of the bottom shape of the housing box is increased.

In addition, the presence of the reference line easily avoids interference with the vehicle body and improves the workability when the unit swing type engine is attached to and detached from the vehicle body.

### BRIEF DESCRIPTION OF THE DRAWINGS

Fig. 1 is a right side view of a scooter-type motorbicycle in accordance with an embodiment of the
Fig. 2 is an enlarged side view of the carburetor shown in Fig. 1; and
Fig. 3 is an enlarged plan view of the oil pump shown in Fig. 1.

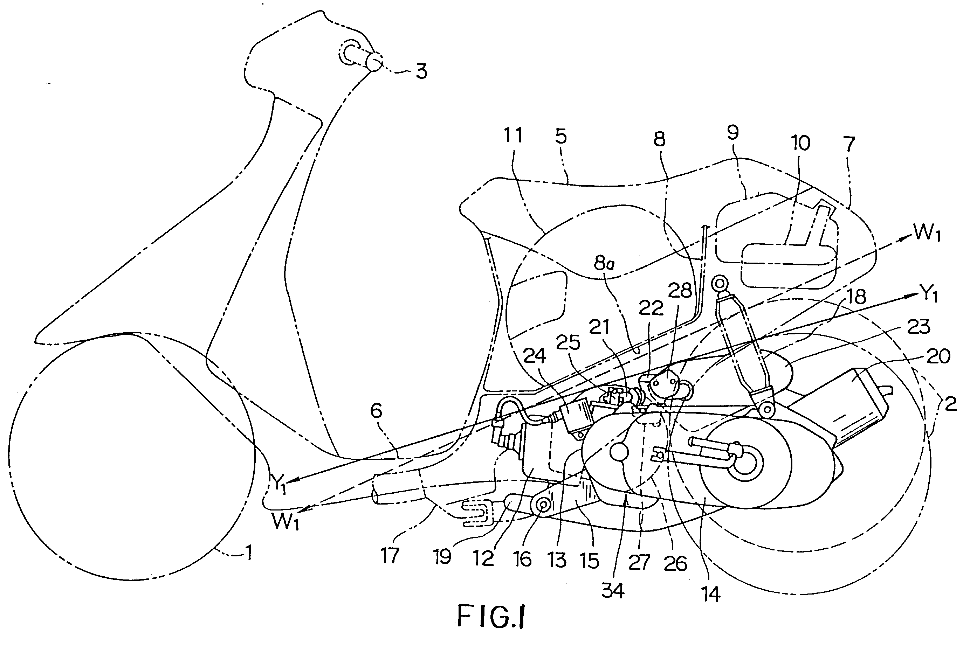

The scooter-type motorbicycle of the first embodiment shown in Fig. 1 comprises a front wheel 1 controlled by a handle 3, a rear wheel 2 driven by a unit swing type engine 4, both of which support the vehicle, and a step board 6 placed so as to be curved at a low position between the handle 3 and a seat 5. A rear body 7 on which the seat 5 is placed is thus designed to have a relatively large volume. A unit swing type engine 34 which is provided integrally with the rear wheel 2 is disposed under the rear body 7.

In the rear body 7, a housing box 8 is disposed in a front portion thereof, and a fuel tank 9 and an oil tank 10 are disposed in a rear portion thereof. The housing box 8 has a volume which can contains a full face helmet 11.

The unit swing type engine 34 comprises a cylinder 12 substantially horizontally provided on the front portion thereof, a crankcase 13 connected to the rear portion of the cylinder 12 and a swing case 14 backwardly extended from one side of the crankcase 13. The rear wheel 2 is rotatably supported by the rear portion of the swing case 14 and is placed immediately behind the crankcase 13. The upper side profile of the rear wheel 2 is placed under the rear portion of the rear body 7. A supporting arm 15 provided on a lower-front portion of the unit swing type engine 34 is rotatably supported on a frame 17 by a pivot 16 so that it can oscillate in the vertical direction, and an upper-rear portion of the engine 34 is supported by a rear cushion unit 18 so as to be cushioned and suspended thereby.

An exhaust pipe 19 is extended from the lower side of the cylinder 12 and connected to a muffler disposed on the side of the rear wheel 2 opposite to the swing case 14. An inlet pipe 21 introduced into an upper-front portion of the crankcase 13 is connected to a carburetor 22 placed above the rear portion of the crankcase 13. An air cleaner 23 is connected to the rear portion of the carburetor 22 and has an upper side profile placed below the rear portion of the rear body 7. The inlet pipe 21, the carburetor 22 and the air cleaner 23 constitute an inlet system.

In addition, an ignition coil 24 is attached to a front portion on one side of the crankcase 13. Further, an oil pump 25 for lubricating each portion of the engine is disposed on an upper-front portion of the crankcase 13 so as to be parallel with the introduced portion of the inlet pipe 21.

Since the engine 34 is a forcedly air-cooled engine, the surface of the cylinder 12 is covered with a cylinder cowling, and a blowing fan casing 26 is attached to one side of the crankcase 13 and covers a blowing fan supported by an end of a crankshaft. The casing 26 communicates with the cylinder cowling so as to guide the wind from the blowing fan and cool the cylinder 12.

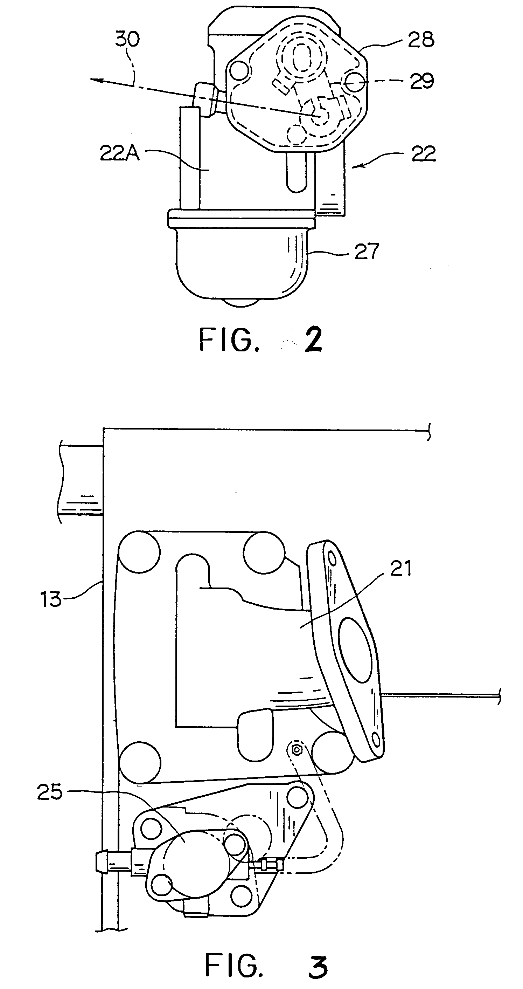

The upper side profile of the unit swing type engine 34 configured as described above has irregularity at the top thereof which is caused by two parts which are roughly divided into one part such as the cylinder 12, the fan casing 26 and the like, each of which has no degree of freedom because of their properties, and the other part such as the carburetor 22, the air cleaner 23 and the like, each of which has a relatively high degree of freedom. As shown in Fig. 2, the carburetor 22 comprises a throttle lever 29 placed on the side of the carburetor body 22A, a throttle lever box 28 fixed to the carburetor body 22A so as to cover the throttle lever 29 and a throttle cable 30 forwardly extended from the front side of the throttle level box 28. In this way, the carburetor 22 used has no projection above the upper side thereof. A float chamber 27 is provided on the lower side of the carburetor body 22A. The carburetor 22 is mounted so that the float chamber 27 enters the depression between the crankcase 13 and the rear wheel 2.

Since the air cleaner 23 is disposed at the side of the rear wheel 2 so as to overlap it, the necessary volume is ensured at a lower position.

In the unit swing type engine 34, a common tangential line which touches two points on the upper side profile of the peripheral surface of the fan casing 26 and on the upper side profile of a rear wheel 2 is considered as a phantom reference line Y₁-Y₁. The carburetor 22 and the air cleaner 23 are mounted so that the upper ends of the upper side profiles of the carburetor 22 and the air cleaner 23 are placed on or under the reference line Y₁-Y₁.

When the unit swing type engine 34 is cushioned around a pivot 16 serving as a center, the upper side profile of the engine 34 oscillates together with the reference line Y₁-Y₁. This causes the simplification of the positional relation to the bottom 8a of the housing box 8, the fuel tank 9 and the oil tank 10 and of the oscillation locus of the engine 34. At the maximum oscillation stroke, the tangential line W₁-W₁ shown in Fig. 1 is obtained.

The above-described arrangement reasonably enables the stroke amount of the rear cushion unit 18 to be increased for improving the feeling of driving, the height of the seat 5 to be decreased for improving the feeling of step and the bottom shape of the housing box 8 to be determined so as to increase the volume thereof without any limitations.

In addition, since there is no projection above the reference line Y₁-Y₁ in this embodiment, it is possible to easily avoid interference with the vehicle body and thus improve the workability when the unit swing type engine 34 is attached to and detached from the vehicle body.

The pivot may be provided at a position above the front position of the crankcase.

## Claims

1. A scooter type vehicle comprising a step board (6) curved at a low position between a handle (3) and a seat (5), a housing box (8) disposed in a rear body (7) provided under the seat (5), and a unit swing type engine (34) disposed under the rear body (7) and cushioned and suspended by a rear cushion unit (18) so as to be oscillated, and the unit swing type engine (34) comprises a crankcase (13) having a blowing fan casing (26) disposed thereon, a cylinder (12) substantially horizontally projected from the crankcase (13), a swing case (14) backwardly extended from the crankcase (13) so as to rotatably support a rear wheel (2) at the rear portion thereof, an inlet system including a carburetor (22) and an air cleaner (23), an ignition coil (24), and an oil pump (25);
characterized in that the upper end of the upper side profile of the inlet system, the ignition coil (24) and the oil pump (25) are placed under a reference line (Y₁ - Y₁), which is defined by a common tangential line which touches the upper side profile of both the blowing fan casing (26) and the rear wheel (2).

2. A scooter-type vehicle according to claim 1, wherein a pivot (16) serving as the center of oscillation of the unit swing type engine (34) is provided under the front portion of a crankcase.

3. A scooter-type vehicle according to claim 1, wherein a pivot (16a) serving as the center of oscillation of a unit swing type engine (34) is provided above the rear portion of a crankcase (13).

4. A scooter-type vehicle according to claim 1, wherein two wheels are rotatably supported by a swing case (14) of the unit swing type engine (34).

## Patentansprüche

1. Rollerfahrzeug, umfassend ein Trittbrett (6), das sich unten zwischen einem Handgriff (3) und einem Sitz (5) erstreckt, einen Staukasten (8), der in einem unter dem Sitz (5) befindlichen hinteren Karosserieteil (7) vorgesehen ist, und eine Pendel-Motoreinheit (34), die unter dem hinteren Karosserieteil (7) angeordnet und von einer hinteren Stoßdampfereinheit (18) schwingfähig abgefedert und aufgehängt ist, wobei die Pendel-Motoreinheit (34) ein Kurbelgehäuse (13) mit einem daran angebrachten Gebläsegehäuse (26), einen sich im wesentlichen horizontal von dem Kurbelgehäuse (13) aus erstreckenden Zylinder (12), ein sich von dem Kurbelgehäuse (13) aus nach hinten erstreckendes Schwingengehäuse (14) zur drehbaren Lagerung eines Hinterrades (2) an seinem hinteren Teil, ein Einlaßsystem mit einem Vergaser (22) und einem Luftreiniger (23), eine Zündspule (24) und eine Ölpumpe (25) aufweist; **dadurch gekennzeichnet**,
daß das obere Ende des oberen Seitenprofils des Einlaßsystems, die Zündspule (24) und die Ölpumpe (25) unterhalb einer Bezugslinie (Y₁-Y₁) angeordnet sind, welche definiert ist durch eine gemeinsame Tangente, welche das obere Seitenprofil von sowohl dem Gebläsegehäuse (26) als auch dem Hinterrad (2) berührt.

2. Rollerfahrzeug nach Anspruch 1, bei dem ein als Schwingzentrum der Pendel-Motoreinheit (34) dienender Drehpunkt (16) unter dem vorderen Abschnitt eines Kurbelgehäuses vorgesehen ist.

3. Rollerfahrzeug nach Anspruch 1, bei dem ein als Schwingzentrum der Pendel-Motoreinheit (34) dienender Drehpunkt (16a) oberhalb des hinteren Abschnitts des Kurbelgehäuses (13) vorgesehen ist.

4. Rollerfahrzeug nach Anspruch 1, bei dem zwei Räder drehbar von einem Schwingengehäuse (14) der Pendel-Motoreinheit (34) gelagert sind.

## Revendications

1. Véhicule du type scooter, qui comprend une plaque repose-pieds (6) incurvée à une position basse entre un guidon (3) et un siège (5), un boîtier de logement (8) disposé dans un corps arrière (7) prévu sous le siège (5), et un moteur (34) du type oscillant disposé sous le corps arrière (7) et amorti et suspendu par une unité d'amortissement arrière (18) de manière à pouvoir osciller, et dans lequel le moteur (34) du type oscillant comprend un carter de vilebrequin (13) sur lequel est disposé un carter (26) pour un ventilateur de soufflage, un cylindre (12) se projetant sensiblement horizontalement depuis le carter de vilebrequin (13), un boîtier oscillant (14) qui s'étend vers l'arrière depuis le carter de vilebrequin (13) de manière à supporter en rotation une roue arrière (2) à la partie postérieure de celui-ci, un système d'admission qui comprend un carburateur (22) et un filtre à air (23), une bobine d'allumage (24), et une pompe à huile (25);
caractérisé en ce que l'extrémité supérieure du profil supérieur du système d'admission, de la bobine d'allumage (24) et de la pompe à huile (25) est placée sous une ligne de référence (Y₁-Y₁) qui est définie par une ligne tangente commune qui touche le profil supérieur à la fois du carter (26) du ventilateur de soufflage et de la roue arrière (2).

2. Véhicule du type scooter selon la revendication 1, dans lequel un pivot (16) qui sert de centre d'oscillation pour le moteur (34) du type oscillant est prévu sous la partie avant d'un carter de vilebrequin.

3. Véhicule de type scooter selon la revendication 1, dans lequel un pivot (16a) servant de centre d'oscillation pour un moteur (34) du type oscillant est prévu au-dessus de la partie arrière d'un carter de vilebrequin (13).

4. Véhicule de type scooter selon la revendication 1, dans lequel deux roues sont supportées en rotation par un boîtier oscillant (14) du moteur (34) du type oscillant.
